# EUROPÄISCHE PATENTSCHRIFT

(11) **EP 1 562 844 B1**
(45) Veröffentlichungstag und Bekanntmachung des Hinweises auf die Patenterteilung: **23.04.2008**
(21) Anmeldenummer: 03788805.4
(22) Anmeldetag: 19.11.2003
(51) Int. Cl.: B65F 1/14, A47G 29/12

(54) **INTERAKTIVER AUFNAHMEBEHÄLTER**
INTERACTIVE CONTAINER
CONTENANT INTERACTIF

(30) Priorität: 19.11.2002 DE 20217842 U; 31.03.2003 DE 20305134 U
(43) Veröffentlichungstag der Anmeldung: 17.08.2005
(73) Patentinhaber: Fiedler, Sepp, 10999 Berlin (DE); Schmidt, Hartmut, 15838 Wünsdorf (DE)
(72) Erfinder: Fiedler, Sepp, 10999 Berlin (DE); Schmidt, Hartmut, 15838 Wünsdorf (DE)
(74) Vertreter: Omsels, Hermann-Josef
(86) Internationale Anmeldenummer: PCT/DE2003/003865
(87) Internationale Veröffentlichungsnummer: WO 2004/045992

(56) Entgegenhaltungen:
- WO-A-00/55833
- WO-A-02/20373
- DE-C- 4 336 334
- DE-U- 20 305 134
- GB-A- 2 261 096
- GB-A- 2 321 518
- US-A- 5 532 680

## Beschreibung

Die Erfindung betrifft einen Behälter zur Aufnahme von hineingeworfenen Gegenständen mit einer im oberen Teil des Behälters angeordneten Einwurfsöffnung gemäss dem Oberbegriff des Anspruchs 1.

Bisherige Behälter zur Aufnahme von hineingeworfenen Gegenständen, wie z.B. Müll- oder Wäscheeimer oder Briefkästen, haben den Nachteil, dass der Einwurf der jeweiligen Gegenstände nicht detektiert wird und die Person, die die Gegenstände einwirft, keine Rückmeldung über den ordnungsgemäßen Einwurf erhält.

Die bisherigen Behältern bieten zudem keinen großen Anreiz zum Hineinwerfen von Gegenständen, da sie einerseits bei Dunkelheit nicht wahrgenommen werden und andererseits nach Einwurf keine Rückmeldung erfolgt und somit das Interesse der vorbeigehenden Person nicht geweckt wird. Gerade dieser ausbleibende "Belohnungseffekt" durch den aufnehmenden Behälter beim Einwurf von Gegenständen veranlasst viele Personen die Gegenstände gerade nicht in die vorgesehenen Behälter sondern einfach auf die Strasse zu werfen. Ein Behälter, der zur Interaktion" mit einer Person, die etwas einwirft, in der Lage ist, könnte einen Anreiz dazu bieten, diesen Behälter auch tatsächlich zu nutzen.

So offenbart die GB-A-2 321 518 einen gattungsgemäßen Behälter, der geeignet ist mittels einer Lichtschranke den Einwurf von Gegenständen zu detektieren. Infolge einer derartigen Detektion ist vorgesehen, dass unter anderem Audiosignale ausgegeben werden können. Diese Signale dienen jedoch der Bestätigung der Detektion eines eingeworfenen Gegenstandes und nicht dazu, dass die ausgegebenen Signale selber einen Anreiz zum Einwurf von Gegenständen darstellen.

Ausgehend von diesem Stand der Technik ist es die Aufgabe der vorliegenden Erfindung, einen Behälter und ein Kit zum nachrüsten eines Behälters zur Verfügung zu stellen, der - gegebenfalls nach Installation des Kits - zur audiovisuellen Interaktion bei Annährung an den Behälter oder sein Nutzung geeignet ist.

Gelöst wird diese Aufgabe durch ein Behälter mit der kennzeichenden Merkmalen des Anspruchs 1 und ein Kit zum nachrüsten eines Behälters nach Anspruch 21.

Bei einem erfindungsgemäßen Behälter kann die integrierte Elektronik auch eine Datenverarbeitungseinrichtung sein, welche die akustischen und/oder visuellen Effekte, welche ausgegeben werden steuert. Des weiteren ist vorgesehen, dass die Datenverarbeitungseinrichtung mit Speichermodulen bestückt werden kann, auf denen Steueralgorithmen für den Behälter oder Audiosignale abgelegt sind.

Die Lichtbänder (LISA ACRYLGLAS) können mit farblich unterschiedlichen Leuchtdioden ausgestattet sein, so dass unterschiedliche visuelle Eindrücke des Behälters erzeugt werden können, wobei die integrierte Elektronik die Steuerung vornimmt. An der Außenseite des Behälters können Sensoren, wie z.B. Bewegungsmelder, angebracht sein zur Aktivierung der Lichtbänder bei der Annährung einer Person an den Behälter.

Der Behälter kann mit einer lichtleitenden Beschichtung, insbesondere einer Acrylglasbeschichtung, umschlossen und die lichtleitende Beschichtung kann mit den Lichtbändem direkt verbunden sein. Durch die direkte Verbindung wird das von den Lichtbändern ausgehende Licht in die lichtleitende Beschichtung geleitet und dort gestreut, so dass die Außenseite des Behälters mit dem erzeugten Streulicht vollständig beleuchtet wird. Dieses Streulicht kann genutzt werden um austauschbare, transparente Werbefolien, die auf dem Acrylglas angebracht sein können, zu beleuchten.

Weiterhin kann das Audioausgabegerät, insbesondere ein Lautsprecher, Ton- und Sprachausgaben ausgeben, wobei das Audioausgabegerät so im Inneren des Behälters angeordnet ist, dass der so erzeugte Schall aus der Einwurföffnung direkt oder über Schallreflexionen austritt. Zusätzlich ist die integrierte Elektronik mit einer Radioantenne verbunden und über den Lautsprecher werden Radiosignale ausgegeben.

Ebenfalls kann das Solarmodul wahlweise auf der Rückseite des Behälters und/oder bei einer Mastmontage des Behälters an einen Mast auf dem oberen Ende des Mast angeordnet sein.

Bei der Spannungsquelle des erfindungsgemäßen Behälters handelt es sich vorzugsweise um einen Akku, der sowohl durch das Solarmodul als auch durch eine externe Spannungsquelle geladen wird. Der Ladevorgang kann durch eine Elektronik gesteuert werde, sodass eine Tiefentladung des Akkus verhindert wird. Durch dies Maßnahme wird die Lebensdauer des Akkus erheblich verlängert und die Betriebskosten des erfindungsgemäßen Behälters werden so verringert.

In einer bevorzugten Ausführungsform der Erfindung handelt es sich bei dem Behälter um einen Papierkorb bzw. Mülleimer. Denkbar ist aber auch die Verwendung von Briefkästen oder Sicherheitsverwahrungsfächern, z.B. bei Banken im Außenbereich oder ähnlichen Einrichtungen.

Die Rückseite des oberen Teils des Behälters, insbesondere eines im wesentlichen bekannten Mülleimers, ist angeschrägt, wobei die Winkellage der Schräge für eine optimale Sonnenlichtausbeute der an der Rückseite angeordneten Solarmodule ausgenutzt wird.

Die Erfindung hat den Vorteil, insbesondere wenn es sich um einen Mülleimer handelt, dass durch die in den Mülleimer integrierte Elektronik hineingeworfene Gegenstände detektiert werden und als Reaktion auf die Detektion ein Signal ausgelöst wird, welches beispielsweise - aber nicht ausschließlich - in einem Blinken des Leuchtbandes und/oder einer Sprachausgabe und/oder Musikausgabe besteht. Auch ist über die erfindungsgemäße Mülltonne eine Werbebotschaft vermittelbar, z.B. durch Sprachausgabe oder aber durch die Mülltonne selbst, deren Ummantelung als (permanent oder teilweise) erleuchtete Werbefläche genutzt wird. Radioausgabe ist ebenso denkbar.

Die in dem Mülleimer befindliche Elektronik ist mit einer Software/Hardware ausgestattet, die dazu geeignet ist, durch einfache dem Fachmann geläufige Handgriffe aktualisiert (update) zu werden (auch online oder mittels drahtloser Kommunikation). Auf diese Weise kann sehr einfach der Text oder die Musik- bzw. Werbebotschaft etc. aktualisiert werden und auch tagtäglichen Mitteilungsbotschaften (Nachrichten) angepasst werden. Die Elektronik kann dabei über Kabelstecker oder eine Datensende- und -empfangsanlage mit einem externen Rechner verbunden und Daten zwischen der Elektronik und dem externen Rechner ausgetauscht werden.

Ein erfindungsgemäßer Behälter weist modulare Funktionseinheiten, nämlich Solarmodul, Sensor-Lampen-Modul und Elektronikmodul auf. Die gesamte Steuerung, Akku und Sprachmodule sind sicher in einem U-Profil aus Stahlblech eingebaut und bilden so dass Elektronikmodul, das auf dem Vierkantprofil zur Aufnahme der Zigarettenkippen, mit einer Sicherheitsschraube fixiert ist. Diese Schraube ist im Zigaretteneinwurf von vorne erreichbar. Viele der herkömmlichen Mülleimer weisen eine solche Sammeleinheit für Zigarettenkippen bereits auf, die im Inneren des Behälters angeordnet sind und bei dem die Einwurföffnung in der Einwurföffnung des Mülleimers angeordnet ist.

Ein Update der Ton bzw. Lichteffekte ist durch Einstecken eines vorher programmierten Sprachmoduls - optional als Dienstleistung des Herstellers - mit Sprachchip, Verstärker und entsprechenden Steuerparametern möglich. Das Sprachmodul wird beispielsweise in Form einer 25-poligen Steckerleiste durch die Entleerungsklappe des Mülleimers von unten in das Elektronikmodul gesteckt, welches ja in dem U-Profil eingebaut ist.

Das Solarmodul kann extern bzw. räumlich getrennt von dem Behälter an einem Aufstellmast oder einer Laterne mit Schellen befestigt sein. Durch diese erfindungsgemäße Maßnahme ist das Solarmodul sicher vor Vandalismus und es ist auch ein höherer Energieertrag zu erwarten. Die elektrische Zuleitung vom Solarmodul zu dem erfindungsgemäßen Behälter findet über kupferkaschiertes Folienkabel statt.

Die Einheit bestehend aus Solarmodul, Sensor-Lampen-Modul und Elektronikmodul kann auch bei folgenden Anwendungen zum Einsatz kommen:
- als Schließfachsteuerung mit Beleuchtung im Außenbereich.
- als Briefkasten mit akustischer Werbefunktion, Beleuchtung und Display
- als Notrufsäule
- als Teil einer Überwachungsanlage
- Stadtinformationssystem, Leitsystem für Themen- und Vergnügungsparks.

Der Einwurfsensor ist mit einem LED-Lampenstab zu einem Servicemodul auf einem Stahlblechwinkel montiert. Dieses Modul ist über eine Steckverbindung mit dem Elektronikmodul im U-Profil verbunden. Der Lautsprecher befindet sich im obersten Teil des U-Profils und damit in Höhe der Einwurföffnung. Der Sensor kann durch Einstellung auf Einwurf aber auch auf Passanten reagieren, d.h. sie ansprechen. Die Elektronik erlaubt die Einstellung beliebiger, beleuchtungsabhängiger Einschaltschwellen für die Funktionen Sprache (am Tag) und Licht (in der Nacht).

Der Akku wird temperaturkompensiert vom Solarmodul geladen und vor Tiefentladung durch Lastabwurf geschützt. Eine externe Spannungsquelle kann zum Laden über Steckkontakt mit dem Akku verbunden werden. Der Tiefentladenschutz kann mittels Taster zur Funktionskontrolle der Elektronik deaktiviert werden.

Bei den ausgegebenen Audiosignalen kann es sich um eine sogenannte Geräuschdusche, d.h. die Wiedergabe von Tonfrequenzen die den Umgebungslärm mit einer harmonischen Komponente überlagern und dadurch dämpfen, handeln. Des weiteren können per Mikrofon vorher aufgefangene akustische Signale wiedergegeben werden, welche Passanten als Quasi-Dialog oder Echofunktion erscheinen.

Weiterhin kann vorgesehen sein, dass, sobald der maximale Füllstand eines erfindungsgemäßen Behälters, insbesondere eines Mülleimers, erreicht ist, sich die Bodenklappe öffnet und ein im Behälter befestigter PE-Sack mit dem Inhalt, z.B. Abfall, zu Boden fällt, womit sich das Fassungsvermögen des Behälters fast verdoppelt. Gleichzeitig kann ein Signal an die Zentrale gegeben und die Sprachausgabe: " Leider schon voll." aktiviert werden, bzw. das Licht aus- oder Blinklicht eingeschaltet werden.

Eine zur Strasse gewandte IR-LED kann als Signalgeber für eine nötige, bzw. unnötige Leerung dienen, indem im anfahrenden Wartungsfahrzeug automatisch angezeigt wird, ob der Behälter voll oder leer ist. Dadurch werden die Stop-and-Go Intervalle der Wartungsfahrzeuge vermindert und Arbeitszeit gespart.

Die Erfindung wird anhand von Ausführungsbeispielen und der nachfolgenden Figuren näher beschrieben; es zeigt:
- **Fig. 1**: Gesamtansicht des erfindungsgemäßen Behälters;
- **Fig. 2**: Schematische Darstellung eines erfindungsgemäßen Behälters mit Zigaretteneinwurf;
- **Fig. 3**: Schnittzeichnung des oberen Teils der Behälters mit integrierter Elektronik und Detektionssensoren;
- **Fig. 4**: Ansicht eines an einem Mast montierten erfindungsgemäßen Behälters mit räumlich getrenntem Solarmodul.

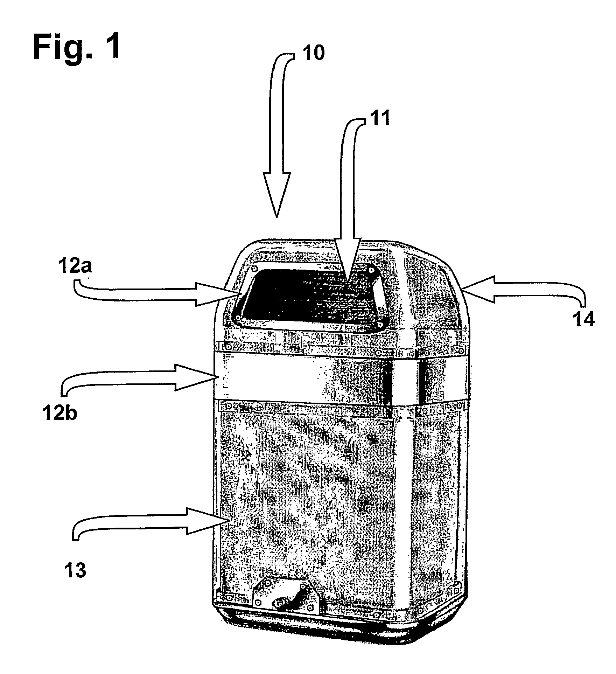

Figur 1 zeigt eine Gesamtansicht des erfindungsgemäßen Behälters 10. Um die Einwurfsöffnung 11 ist ein Lichtband 12a angeordnet. Ebenfalls ist um den Mittelteil des Behälters 10 ein Lichtband 12b angeordnet, das mit der den Behälter 10 umschließenden Acrylglasbeschichtung 13 direkt verbunden ist. Durch den direkten Kontakt zwischen dem Lichtband 12b und der Acrylglasbeschichtung 13 wird das Licht gestreut und beleuchtet den gesamten Behälter 10. Auf der abgeschrägten Rückseite 14 des oberen Teils des Behälters 10 ist ein Solarmodul (nicht dargestellt) angebracht und dient zur Stromversorgung einer im Behälter 10 integrierten Elektronik 15, sowie der angebrachten Ausgabegeräte.

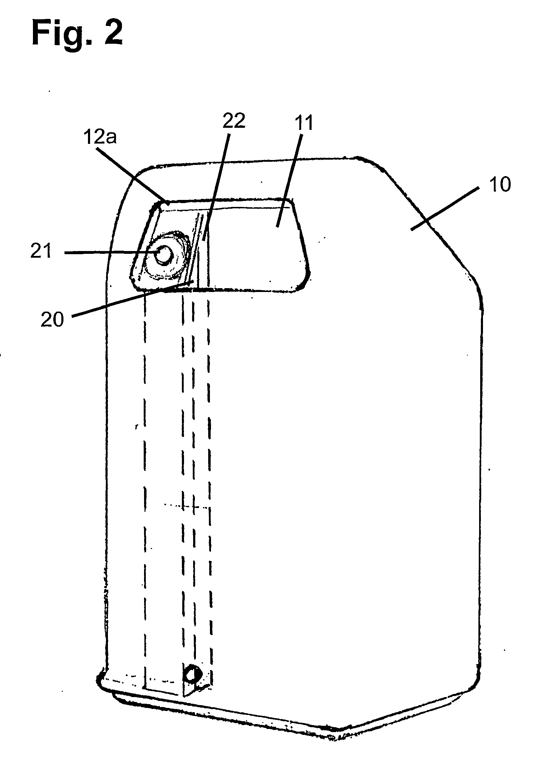

In Figur 2 ist ein erfindungsgemäßer Behälter schematisch dargestellt, der einen separaten Sammelbehälter für Zigaretten mit einer separaten Einwurföffnung 21 aufweist. Hinter dem Zigarettensammelbehälter 20 ist das Elektronikmodul 22 montiert, Die gestrichelten Linien zeigen den Verlauf des Zigarettensammelbehälters 20 und des Elektronikmoduls 22 im Inneren des Behälters 10 an.

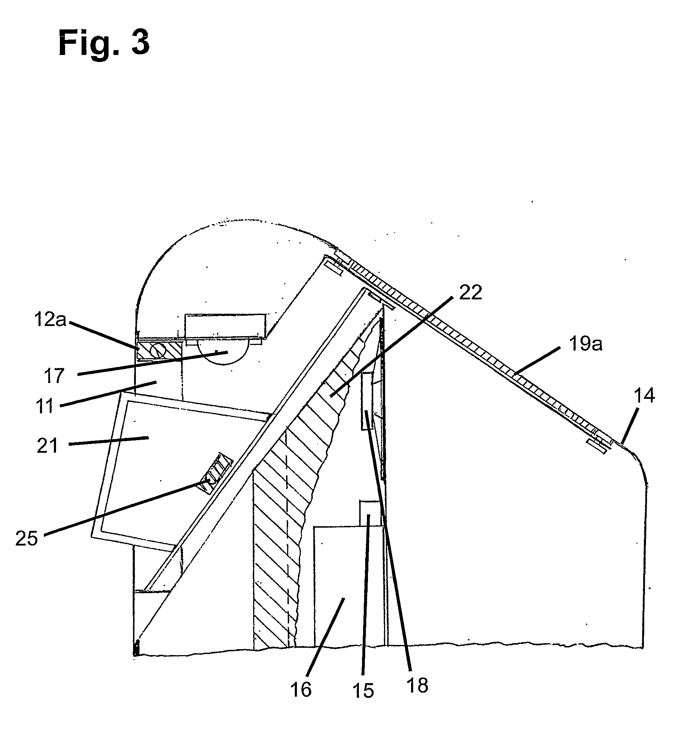

Fig. 3 zeigt eine Schnittzeichnung des oberen Teils der Behälters mit hinter dem Zigarettensammelbehälter 20 mittels einer Schraube befestigten Elektronikmodul 22 im Inneren des Behälters 10. Im Elektronikmodul 22 des Behälters 10 ist der Lautsprecher 18, die integrierte Elektronik 15 und die Spannungsversorgung 16 angeordnet. In der Einwurföffnung 11 befinden sich der Zigaretteneinwurf 21, der durch die Zigaretteneinwurfbeleuchtung 25 beleuchtet wird, die Bewegungssensoren 17 sowie das Einwurflichtband 12a. Auf der abgeschrägten Rückseite 14 des Behälters 10 ist das Solarmodul 19a angeordnet und durch eine Plexiglasabdeckung geschützt. Die Spannungsversorgung 16 sind herkömmliche Akkus (Bleigel, NiCd, NiMh oder Li-Ionen) und mit dem Solarmodul 19a verbunden. Weiterhin ist in der Einwurfsöffnung 11 ein Einwurflichtband 12a angebracht.

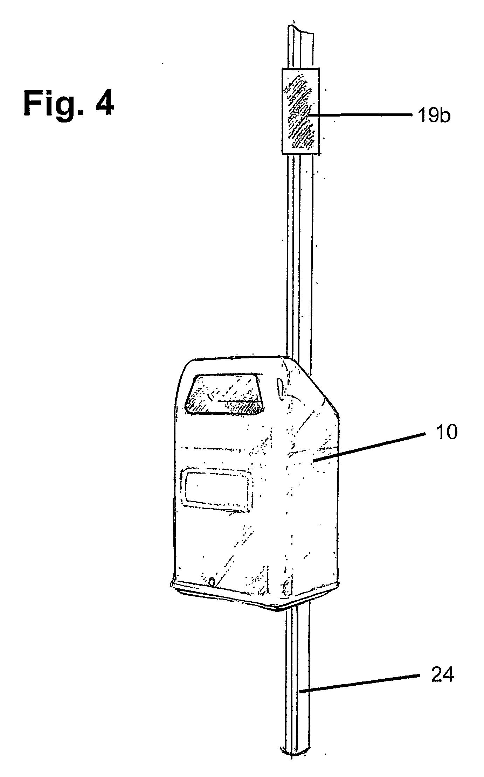

Figur 4 zeigt die Ansicht eines an einem Mast 24 montierten erfindungsgemäßen Behälters 10 mit räumlich getrenntem Solarmodul 19b.

### Bezugszeichen

- 10.: Behälter
- 11.: Einwurföffnung
- 12a.: Einwurflichtband
- 12b.: Behälterlichtband
- 13.: lichtleitende Beschichtung
- 14.: abgeschrägte Rückseite
- 15.: Integrierte Elektronik
- 16.: Spannungsversorgung
- 17.: Bewegungssensor
- 18.: Lautsprecher
- 19a.,: 19b. Solarmodul
- 20.: Zigarettensammelbehälter
- 21.: Zigaretteneinwurf
- 22.: Elektronikmodul
- 24.: Mast
- 25.: Zigaretteneinwurfbeleuchtung

## Patentansprüche

1. Behälter (10) zur Aufnahme von hineingeworfenen Gegenständen mit einer im oberen Teil des Behälters (10) angeordneten Einwurföffnung (11), wobei im Inneren des Behälters (10) mindestens eine Lichtschranke den Einwurf eines Gegenstandes in den Behälter (10) delektiert und aufgrund der Detektion des eingeworfenen Gegenstandes durch eine integrierte Elektronik (15) Geräte (12a, 12b; 18) zur visuellen und/oder Audioausgabe von Signalen angesteuert werden, und innerhalb des Behälters (10) eine Spannungsquelle (16) zur, unter anderem, Stromversorgung der integrierten Elektronik (15) und der visuellen und/oder Audioausgabegeräten (12a, 12b; 18) angeordnet ist, und die Spannungsquelle (16) durch mindestens ein außerhalb des Behälters (10) angebrachtes Solarmodul (19a, 19b) mit Strom versorgt wird oder durch eine externe Spannungsquelle, **dadurch gekennzeichnet, dass** Bewegungssensoren (17) den Einwurf eines Gegenstandes in den Behälter (10) und/oder die Annäherung eines Passanten detektieren, dass in oder an dem Behälter (10) ein Mikrofon angeordnet ist, welches Ton- und/oder Sprachaufzeichnungen, die durch das Audioausgabegerät (18) abgegeben werden können, aufzeichnet, und dass ein um die Einwurföffnung (11) und/oder um den Behälter (10) angeordnetes Lichtband (12a,12b) als visuelles Ausgabegerät dient und permanent oder bei Annährung an den Behälter (10) oder beim Einwurf eines Gegenstandes durch die integrierte Elektronik (15) aktiviert und gesteuert wird.

2. Behälter (10) nach Anspruch 1, bei dem die integrierte Elektronik (15) eine Datenverarbeitungseinrichtung ist.

3. Behälter (10) nach Anspruch 1 oder 2, **dadurch gekennzeichnet, dass** das Lichtband (12a,12b) aus Leuchtdioden besteht.

4. Behälter (10) nach Anspruch 3, **dadurch gekennzeichnet, dass** der Behälter (10) mit einer lichtleitenden Beschichtung (13), insbesondere einer Acrylglasbeschichtung, umschlossen ist, und dass die lichtleitende Beschichtung (13) mit den Lichtbändern (12a,12b) direkt verbunden sind.

5. Behälter (10) nach Anspruch 4, welcher geeignete Befestigungsmittel aufweist, um austauschbare, transparente Werbefolien auf der lichtleitenden Beschichtung (13) aus Acrylglas anzubringen.

6. Behälter (10) nach mindestens einem der Ansprüche 1 bis 5, **dadurch gekennzeichnet, dass** durch das Audioausgabegerät (18), insbesondere einen Lautsprecher, Ton- und Sprachausgaben ausgeben werden, wobei das Audioausgabegerät (18) so im Inneren des Behälters (10) angeordnet ist, dass der so erzeugte Schall aus der Einwurföffnung (11) direkt oder durch Schallreflexionen austritt.

7. Behälter (10) nach mindestens einem der Ansprüche 1 bis 6, **dadurch gekennzeichnet, dass** die Audiosignale auf einem austauschbaren Sprachmodul abgespeichert sind.

8. Behälter (10) nach mindestens einem der Ansprüche 1 bis 7, **dadurch gekennzeichnet, dass** an der Außenseite des Behälters (10) Sensoren, insbesondere Bewegungsmelder, zur Aktivierung der Lichtbänder (12a,12b) angeordnet sind.

9. Behälter (10) nach mindestens einem der Ansprüche 1 bis 8, **dadurch gekennzeichnet, dass** die integrierte Elektronik (15) mit einer Radioantenne verbunden ist und über das Audioausgabegerät (18) Radiosignale ausgegeben werden.

10. Behälter (10) nach mindestens einem der Ansprüche 1 bis 9, **dadurch gekennzeichnet, dass** das Solarmodul (19a, 19b) auf dem oberen Teil des Behälters (10) und/oder bei einer Mastmontage des Behälters (10) räumlich getrennt vom Behälter (10) auf dem oberen Ende des Mastes (24) angeordnet ist.

11. Behälter (10) nach mindestens einem der Ansprüche 1 bis 10, **dadurch gekennzeichnet, dass** es sich bei der Spannungsquelle (16) um einen Akku handelt.

12. Behälter (10) nach Anspruch 11, **dadurch gekennzeichnet, dass** das Solarmodul (19a, 19b) und/oder eine externe Spannungsquelle den Akku, der als Spannungsquelle (16) dient, auflädt.

13. Behälter (10) nach Anspruch 14, **dadurch gekennzeichnet, dass** die integrierte Elektronik (15) eine Tiefentladung des Akkus verhindert.

14. Behälter (10) nach mindestens einem der Ansprüche 1 bis 15, **dadurch gekennzeichnet, dass** die Rückseite (14) des oberen Teils des Behälterkopfteils abgeschrägt ist, wobei ein Winkel der Schräge für eine optimale Sonnenlichtausbeute der an der Rückseite (14) angeordneten Solarmodule (19a) gewählt ist.

15. Behälter (10) nach mindestens einem der Ansprüche 1 bis 14, **dadurch gekennzeichnet, dass** die integrierte Elektronik (15) in einem Elektronikmodul (22) im Kopfteil des Behälters (10) oder auf einem U-Profil hinter einem im Behälter (10) befindlichen Zigarettensammelbehälter (20) angeordnet ist.

16. Behälter (10) nach einem oder mehreren der vorhergehenden Ansprüche, **dadurch gekennzeichnet, dass** die integrierte Elektronik (15) mit einem Softwareprogramm verbunden ist, welches die visuelle- und/oder Audiosignalausgabe steuert.

17. Behälter (10) nach einem oder mehreren der vorhergehenden Ansprüche, **dadurch gekennzeichnet, dass** die integrierte Elektronik (15) über Kabelstecker oder eine Datensende- und -empfangsanlage mit einem externen Rechner verbunden wird und Daten zwischen der integrierte Elektronik (15) und dem externen Rechner ausgetauscht werden.

18. Behälter (10) nach Anspruch 17, **dadurch gekennzeichnet, dass** er über die Kabelstecker oder Datensende- und -empfangsanlage den Füllzustand des Behälters (10) anzeigt.

19. Behälter (10) nach einem oder mehreren der vorhergehenden Ansprüche, **dadurch gekennzeichnet, dass** er über das Audio ausgabegerät (18), insbesondere einen Lautsprecher, spezielle Frequenzen wiedergibt, welche durch Überlagerung mit den Umgebungsgeräuschen des Behälters (10) die Umgebungsgeräusche dämpfen.

20. Behälter (10) nach einem oder mehreren der vorhergehenden Ansprüche, **dadurch gekennzeichnet, dass** der Behälter (10) ein Mülleimer, ein Papierkorb, ein Briefkasten oder ein Sicherheitsverwahrungsfach ist.

21. Kit zum Nachrüsten eines Behälters (10), wobei der Behälter (10) ein Mülleimer, ein Papierkorb, ein Briefkasten oder ein Sicherheitsverwahrungsfach ist, bestehend aus einem Sensor-Lampen-Modul (23), Elektronikmodul (22) und einem Solarmodul (19a, 19b), wobei das Sensor-Lampen-Modul (23) aus einem Bewegungssensor (17), einem Einwurflichtband (12a) und einem Behälterlichtband (12b) besteht, wobei ein um die Einwurföffnung (11) und/oder um den Behälter (10) angeordnetes Lichtband (12a,12b) als visuelles Ausgabegerät dient und permanent oder bei Annährung an den Behälter (10) oder beim Einwurf eines Gegenstandes durch die integrierte Elektronik (15) aktiviert und gesteuert wird, sowie aus geeigneten Befestigungsmitteln und optional einer Zigaretteneinwurfbeleuchtung (25) besteht.

22. Kit nach Anspruch 21, **dadurch gekennzeichnet, dass** das Solarmodul (19a, 19b) aus einer extern oder auf einer abgeschrägten (14) Rückseite (14) des oberen Teils des Behälterkopfteils anzubringenden Solarzelle, einem kupferkaschierten Folienkabel sowie geeigneten Befestigungsmitteln besteht.

23. Kit nach Anspruch 21, **dadurch gekennzeichnet, dass** das Elektronikmodul (22) aus einer Elektronik (15) zur Steuerung, einer Spannungsquelle (16), Lautsprecher (18) sowie einem Träger und geeigneten Befestigungsmitteln besteht.

## Claims

1. Container (10) for taking-up thrown in objects, with a feed hole (11) positioned in the upper part of the container (10), wherein at least one light barrier in the inner part of the container (10) detects the insertion of an object into the container (10) and, as a result of the detection of the thrown in object devices (12a, 12b, 18) for the visual and/or audio output of signals are actuated via an integrated electronic circuit (15), and within the container (10) a voltage source (16) is accommodated for, inter alia, the power supply of the integrated electronic circuit (15) and the visual and/or audio output devices (12a, 12b, 18), and the voltage source (16) is provided with electricity by means of at least one solar module (19a, 19b) fitted to the outside of the container (10), or by an external voltage source (16), **characterised in that** motion detectors (17) detect the insertion of an object into the container (10) and/or the approach of a pedestrian, that in or on the container (10) a microphone is attached that tapes audio- and/or voice recordings, that can be played back by the audio output device (18), and that a light band (12a, 12b) arranged around the feed hole (11) and/or the container (10), serves as a visual output device and that is activated and controlled either permanently or by approaching the container (10) or by insertion of an object via the integrated electronic circuit (15).

2. Container (10) according to claim 1, wherein the integrated electronic circuit (15) is a data processing device.

3. Container (10) according to claim 1 or 2, **characterised in that** the light band (12a, 12b) is comprised of light emitting diodes.

4. Container (10) according to claim 3, **characterised in that** the container (10) is coated with a light conducting lamination (13), in particular a plexiglass lamination, and that the light conducting lamination (13) is directly connected to the light bands (12a, 12b).

5. Container (10) according to claim 4, which features suitable attachment devices to fit exchangeable, transparent films for promotional purposes to the light conducting lamination (13) out of plexiglass.

6. Container (10) according to at least one of claims 1 to 5, **characterised in that** by means of the audio output device (18), in particular a loudspeaker, audio or voice outputs are emitted, wherein the audio output device (18) is placed in the inner part of the container (10) in such a way, that the created sound leaves the feed hole (11) either directly or is conducted by sound reflection.

7. Container (10) according to at least one of claims 1 to 6, **characterised in that** the audio signals are saved to an exchangeable voice module

8. Container (10) according to at least one of claims 1 to 7, **characterised in that** the outside of the container is fitted with sensors, in particular motion detectors, for the activation of the light bands.

9. Container (10) according to at least one of claims 1 to 8 **characterised in that** the integrated electronic circuit (15) is connected to a radio antenna and that by means of the audio output device (18) radio signals are emitted.

10. Container (10) according to at least one of claims 1 to 9, **characterised in that** the solar module (19a, 19b) is fitted to the upper part of the container (10) and/or in case the container (10) is attached to a pole, is attached spatially separated from the container (10) to the upper end of the pole (24).

11. Container (10) according to at least one of claims 1 to 10 **characterised in that** the voltage source (16) is a rechargeable battery.

12. Container (10) according to claim 11, **characterised in that** the solar module (19a, 19b) and/or an external voltage source charges the rechargeable battery that functions as voltage source (16).

13. Container (10) according to claim 14, **characterised in that** the integrated electronic circuit (15) prevents a depth discharge of the rechargeable battery.

14. Container (10) according to at least one of claims 1 to 15, **characterised in that** the rear (14) of the upper part of the container top is slanted, wherein an angle of the slant is chosen in regard to the optimal yield of sunlight for the solar modules (19a) fitted to the rear (14).

15. Container (10) according to at least one of claims 1 to 14 **characterised in that** the integrated electronic circuit (15) is fitted within an electronic module (22) to the top part of the container (10) or to a U-profile behind a cigarette receptacle (20) that is situated within the container (10).

16. Container (10) according to one or more of the previous claims **characterised in that** the integrated electronic circuit (15) is connected to a software programme that controls the visual- and/or audio signal output.

17. Container (10) according to one or more of the previous claims, **characterised in that** the integrated electronic circuit (15) is connected to an external computer by means of cable plugs or a data transmission and reception station and data is exchanged between the integrated electronic circuit (15) and the external computer.

18. Container (10) according to claim 17, **characterised in that** it indicates the filling level of the container (10) by means of the cable plugs or the data transmission and reception station.

19. Container (10) according to one or more of the previous claims, **characterised in that** it plays back by means of the audio output device (18), in particular a loudspeaker, special frequencies, which dampen the noise surrounding the container (10) by super-imposing the surrounding noise.

20. Container (10) according to one or more of the previous claims, **characterised in that** the container (10) is a waste bin, a wastepaper basket a mailbox or a safe-deposit box.

21. Kit for retrofitting a container (10), wherein said container (10) is a waste bin, a wastepaper basket a mailbox or a safe-deposit box, consisting of a sensor lamp module (23), an electronic module (22) and a solar module (19a, 19b), wherein the sensor lamp module (23) consists of a motion detector (17), a feed hole light band (12a) and a container light band (12b), wherein a light band (12a, 12b) arranged around the feed hole (11) and/or around the container (10) serves as a visual output device and is activated and controlled either permanently, or by approaching the container (10), or by throwing in an object via the integrated electronic circuit (15), and furthermore, of suitable fixing devices and, optionally, with an opening illumination for the cigarette receptacle.

22. Kit according to claim 21, **characterised in that** the solar module (19a, 19b) consists of a solar cell to be either externally attached or attached to the slanted rear (14) of the upper part of the container (10) top, a copper-clad flat flexible cable (FFC) and suitable fixing devices.

23. Kit according to claim 21, **characterised in that** the electronic module (22) consists of an electronic circuit (15) for control, a voltage source (16), a loudspeaker (18) and, furthermore, a girder and suitable fixing devices.

## Revendications

1. Récipient (10) destiné à reprendre des objets qui y sont jetés, qui présente dans la partie supérieure du récipient (10) une ouverture d'introduction (11) et dans lequel au moins une barrière lumineuse située à l'intérieur du récipient (10) détecte l'introduction d'un objet dans le récipient (10) et, suite à la détection d'un objet introduit par une électronique intégrée (15), des appareils (12a, 12b; 18) d'émission visuelle et/ou audio de signaux sont commandés et une source de tension (16) est disposée à l'intérieur du récipient (10) entre autres pour alimenter en courant l'électronique intégrée (15) et les appareils (12a, 12b; 18) d'émission visuelle et/ou audio, et la source de tension (16) est alimentée en courant par au moins un module solaire (19a, 19b) installé à l'extérieur du récipient (10) ou par une source externe de tension,
**caractérisé en ce que** des détecteurs de mouvement (17) détectent l'introduction d"un objet dans le récipient (10) et/ou l'approche d'un passant, **en ce qu'**un microphone situé dans ou sur le récipient (10) émet des tonalités et/ou des messages vocaux qui peuvent être émis par l'appareil (18) d'émission audio et **en ce qu'**une bande lumineuse (12a, 12b) disposée autour de l'ouverture d'introduction (11) et/ou autour du récipient (10) sert d'appareil d'émission visuelle et est activée et commandée par l'électronique intégrée (15) en permanence ou lorsque l'on s'approche du récipient (10) ou lors de l'introduction d'un objet.

2. Récipient (10) selon la revendication 1, dans lequel l'électronique intégrée (15) est un dispositif de traitement de données.

3. Récipient (10) selon les revendications 1 ou 2, **caractérisé en ce que** la bande lumineuse (12a, 12b) est constituée de diodes luminescentes.

4. Récipient (10) selon la revendication 3, **caractérisé en ce que** le récipient (10) est entouré par un revêtement (13) conducteur de lumière, en particulier un revêtement en verre acrylique et **en ce que** le revêtement (13) conducteur de lumière est relié directement aux bandes lumineuses (12a, 12b).

5. Récipient (10) selon la revendication 4, qui présente des moyens de fixation appropriés qui permettent d'installer des feuilles publicitaires transparentes et remplaçables sur le revêtement (13) conducteur de lumière en verre acrylique.

6. Récipient (10) selon au moins l'une des revendications 1 à 5, **caractérisé en ce que** des tonalités et des émissions vocales sont émises par l'appareil (18) d'émission audio, en particulier un haut-parleur, l'appareil (18) d'émission audio étant disposé à l'intérieur du récipient (10) de telle sorte que le son émis sort directement ou après réflexion du son par l'ouverture d'introduction (11).

7. Récipient (10) selon au moins l'une des revendications 1 à 6, **caractérisé en ce que** les signaux audio sont conservés en mémoire dans un module de mémoire remplaçable.

8. Récipient (10) selon au moins l'une des revendications 1 à 7, **caractérisé en ce que** des détecteurs et en particulier des détecteurs de mouvement sont disposés sur le côté extérieur du récipient (10) pour activer les bandes lumineuses (12a, 12b).

9. Récipient (10) selon au moins l'une des revendications 1 à 8, **caractérisé en ce que** l'électronique intégrée (15) est reliée à une antenne radio et **en ce que** des signaux radio sont émis par l'appareil (18) d'émission audio.

10. Récipient (10) selon au moins l'une des revendications 1 à 9, **caractérisé en ce que** le module solaire (19a, 19b) est disposé sur la partie supérieure du récipient (10) et/ou, lorsque le récipient (10) est monté sur un mât, est séparé spatialement du récipient (10) et est disposé à l'extrémité supérieure du mât (24).

11. Récipient (10) selon au moins l'une des revendications 1 à 10, **caractérisé en ce que** la source de tension (16) est un accumulateur.

12. Récipient (10) selon la revendication 11, **caractérisé en ce que** le module solaire (19a, 19b) et/ou une source externe de tension chargent l'accumulateur qui sert de source de tension (16).

13. Récipient (10) selon la revendication 14, **caractérisé en ce que** l'électronique intégrée (15) empêche une décharge complète de l'accumulateur.

14. Récipient (10) selon au moins l'une des revendications 1 à 15, **caractérisé en ce que** le côté arrière (14) de la partie supérieure de la partie de tête du récipient est incliné, l'angle d'inclinaison est sélectionné pour un rendement optimal de la lumière solaire par les modules solaires (19a) disposés sur le côté arrière (14).

15. Récipient (10) selon au moins l'une des revendications 1 à 14, **caractérisé en ce que** l'électronique intégrée (15) est disposée dans un module électronique (22) disposé dans la partie de tête du récipient (10) ou sur un profilé en U, derrière un récipient (20) de collecte de cigarettes situé dans le récipient (10).

16. Récipient (10) selon l'une ou plusieurs des revendications précédentes, **caractérisé en ce que** l'électronique intégrée (15) est reliée à un programme logiciel qui commande l'émission des signaux visuels et/ou audio.

17. Récipient (10) selon l'une ou plusieurs des revendications précédentes, **caractérisé en ce que** l'électronique intégrée (15) est reliée à un calculateur externe par des fiches pour câble ou une installation d'émission et de réception de données et **en ce que** les données sont échangées entre l'électronique intégrée (15) et le calculateur externe.

18. Récipient (10) selon la revendication 17, **caractérisé en ce qu'**il indique le niveau de remplissage du récipient (10) par l'intermédiaire des fiches de câble ou de l'installation d'émission et de réception de données.

19. Récipient (10) selon l'une ou plusieurs des revendications précédentes, **caractérisé en ce qu'**il émet, par l'intermédiaire de l'appareil (18) d'émission audio, en particulier un haut-parleur, des fréquences spéciales qui amortissent les bruits de l'environnement par superposition au bruit de l'environnement du récipient (10).

20. Récipient (10) selon l'une ou plusieurs des revendications précédentes, **caractérisé en ce que** le récipient (10) est une poubelle, une corbeille à papier, une boîte à lettres ou un caisson de stockage de sécurité.

21. Kit d'équipement d'un récipient (10), le récipient (10) étant une poubelle, une corbeille à papier, une boîte à lettres ou un caisson de stockage de sécurité, constitué d'un module (23) de lampe et de détecteur, d'un module électronique (22) et d'un module solaire (19a, 19b), le module (23) de lampe et de détecteur étant constitué d'un détecteur de mouvement (17), d'une bande lumineuse d'introduction (12a) et d'une bande lumineuse de récipient (12b), une bande lumineuse (12a, 12b) disposée autour de l'ouverture d'introduction (11) et/ou autour du récipient (10) servant d'appareil d'émission visuelle et étant activée et commandée par l'électronique intégrée (15) en permanence ou lorsque l'on s'approche du récipient (10) ou lors de l'introduction d'un objet, et étant également constituée de moyens de fixation appropriés et facultativement d'un éclairage (25) d'introduction de cigarette.

22. Kit selon la revendication 21, **caractérisé en ce que** le module solaire (19a, 19b) est constitué d'une cellule solaire externe à appliquer à l'extérieur ou sur un côté arrière (14) incliné de la partie supérieure de la pièce de tête du récipient, d'un câble en film plat revêtu de cuivre ainsi que de moyens de fixation appropriés.

23. Kit selon la revendication 21, **caractérisé en ce que** le module électronique (22) est constitué d'une électronique (15) de commande, d'une source de tension (16), de haut-parleurs (18) ainsi que d'un support et de moyens de fixation appropriés.
